# EUROPÄISCHE PATENTSCHRIFT

(11) **EP 4 111 596 B1**
(45) Veröffentlichungstag und Bekanntmachung des Hinweises auf die Patenterteilung: **13.12.2023**
(21) Anmeldenummer: 21707939.1
(22) Anmeldetag: 23.02.2021
(51) Int. Cl.: H04B 5/00

(54) **SIGNALÜBERTRAGER ZUM BIDIREKTIONALEN ÜBERTRAGEN VON INFORMATION ZWISCHEN EINEM STEHENDEN TEIL UND EINEM DREHBAREN TEIL**
SIGNAL TRANSMITTER FOR THE BIDIRECTIONAL TRANSMISSION OF INFORMATION BETWEEN A STATIONARY PART AND A ROTATABLE PART
TRANSMETTEUR DE SIGNAUX DESTINÉ À LA TRANSMISSION BIDIRECTIONNELLE D'INFORMATIONS ENTRE UNE PIÈCE FIXE ET UNE PIÈCE ROTATIVE

(30) Priorität: 27.02.2020 DE 102020105234
(43) Veröffentlichungstag der Anmeldung: 04.01.2023
(73) Patentinhaber: Moog GAT GmbH, 65366 Geisenheim (DE)
(72) Erfinder: OTT, Stephan, 65201 Wiesbaden (DE); RAUM, Robert, 90471 Nürnberg (DE); PARAMITHA, Theresia, 90471 Nürnberg (DE)
(74) Vertreter: Wittmann, Ernst-Ulrich
(86) Internationale Anmeldenummer: PCT/EP2021/054375
(87) Internationale Veröffentlichungsnummer: WO 2021/170551

(56) Entgegenhaltungen:
- EP-A1- 0 865 692
- EP-A1- 2 782 262
- EP-A1- 2 933 655
- EP-B1- 0 865 692
- DE-A1-102017 217 051
- US-A1- 2014 099 890
- US-B2- 7 948 395

## Beschreibung

Die vorliegende Erfindung betrifft einen Signalübertrager zum kapazitiven Übertragen von Information mittels eines digitalen elektrischen Signals zwischen einem stehenden Teil und einem gegenüber dem stehenden Teil bewegbaren Teil, wobei der Signalübertrager das stehende Teil mit einer kapazitiven ersten stehenden Kopplungsstruktur und einer galvanisch mit der ersten stehenden Kopplungsstruktur verbundenen stehenden Schnittstelle sowie das drehbare Teil mit einer kapazitiven ersten bewegbaren Kopplungsstruktur und einer galvanisch mit der ersten bewegbaren Kopplungsstruktur verbundenen bewegbaren Schnittstelle umfasst, wobei die stehende Schnittstelle und die drehbare Schnittstelle derart eingerichtet sind, dass sie in einem Betrieb des Signalübertragers ein digitales Ursprungssignal mit einer ersten Datenrate mit jeweils einem Element, das außerhalb des Signalübertragers angeordnet ist, austauschen, wobei die erste stehende Kopplungsstruktur und die erste drehbare Kopplungsstruktur voneinander beabstandet angeordnet sind, sodass sie eine erste kapazitive Übertragungsstrecke für ein Signal von dem stehenden Teil zu dem bewegbaren Teil bilden.

Derartige Signalübertrager finden überall dort Verwendung, wo Information in Form von analogen oder digitalen elektrischen Signalen zwischen einem stehenden Teil und einem bewegbaren Teil, insbesondere einem um eine Drehachse gegenüber dem stehenden Teil drehbaren Teil, übertragen werden sollen. Dabei sind aus dem Stand der Technik Schleifkontakte bekannt, bei denen ein elektrischer Kontakt dadurch bereitgestellt wird, dass eine Bürste an dem einen Teil in Reibeingriff mit einem Schleifkontakt oder Schleifring an dem anderen Teil ist. Überall dort, wo hohe Datenraten in oder aus einem drehenden System übertragen werden müssen, kommen jedoch kontaktlose, insbesondere kapazitive, Signalübertrager zum Einsatz, welche auch höhere Datenraten mit sehr geringer Fehlerrate übertragen können.

Solche berührungslosen Übertragerstrecken werden im Stand der Technik bei Windkrafträdern, Krananlagen, Förderanlagen, Radaranlagen, Drehtürmen auf Fahrzeugen, Gepäckscannern oder Computertomographen aber auch bei linear gegeneinander bewegbaren Teilen, beispielsweise Linearverstellern, eingesetzt.

Allen genannten Beispielen ist gemeinsam, dass sie insbesondere in radialer Richtung, d.h. in einer Richtung senkrecht zur Drehachse, einen beinahe beliebig großen Bauraum für den Signalübertrager bereitstellen. Dies ermöglicht es, die zur kapazitiven, berührungslosen Signalübertragung erforderlichen Kopplungsstrukturen mit einer hinreichenden, für die Signalübertragung erforderlichen Dimensionierung bereitzustellen. Allerdings zeichnen sich Anwendungen ab, bspw. in der Robotik, welche miniaturisierte Signalübertrager für digitale elektrische Signale erfordern.

Druckschrift EP 2 933 655 betrifft einen optoelektronischen Sensor zur Erfassung von Objekten in einem Überwachungsbereich mit einem Lichtsender zum Aussenden eines Sendelichtstrahls, einem Lichtempfänger zum Erzeugen eines Empfangssignals aus dem von Objekten in dem Überwachungsbereich remittierten Licht, einer Sockeleinheit, einer gegenüber der Sockeleinheit beweglichen Abtasteinheit zur periodischen Abtastung des Überwachungsbereichs, sowie einer Auswertungseinheit zur Erfassung von Informationen über Objekte in dem Überwachungsbereich anhand des Empfangssignals. Die Sockeleinheit weist eine erste Übertragungseinheit und die Abtasteinheit eine zweite Übertragungseinheit zur kontaktlosen Übertragung von Energie zwischen der Sockeleinheit und der Abtasteinheit auf.

Druckschrift EP 2 782 262 A1 (D2) betrifft einen kontaktlosen Koppler zur Verwendung bei der Leistungs- und Datensignalübertragung zwischen einer Sendeseite und einer Empfangsseite, mit einem induktiven Kopplungselement, das zum Senden/Empfangen von Leistung durch induktive magnetische Kopplung geeignet ist, und ein kapazitives Kopplungselement, das zum Senden/Empfangen eines Datensignals durch kapazitive Kopplung geeignet ist. Das kapazitive Kopplungselement umfasst ein oder mehrere Paare von kapazitiven Elektroden, die an einem Koppler-Frontend vorgesehen sind. In einer Konfiguration haben die äußere und die mittlere kapazitive Elektrode eine Schleifenform mit einer Öffnung zur Unterbrechung von Strompfaden entlang der Schleifenform. Eine innere kapazitive Elektrode kann aus einer Vielzahl von Elektrodenteilen gebildet werden, die im Wesentlichen die gleiche Form haben und durch ein Schleifenteil elektrisch miteinander verbunden sind. Die Oberfläche der Elektroden kann so gewählt werden, dass bei einem gewünschten Abstand zwischen den Kopplern ein minimaler Kapazitätswert erreicht wird.

Druckschrift DE 10 2017 217051 A1 betrifft eine Vorrichtung sowie ein Verfahren zur Übertragung von Daten zwischen zwei physikalischen Schnittstellen, mit- einer zwischen den physikalischen Schnittstellen angeordneten, Datenübertragungseinheit sowie- jeweils einer den physikalischen Schnittstellen zugeordneten lokalen Oszillatoreinheit zur Einprägung einer am Ort einer der physikalischen Schnittstelle vorherrschenden lokalen Systemzeit, wobei die lokale Oszillatoreinheit an wenigstens einer der physikalischen Schnittstellen ein Mittel zum Empfang und/oder zur Erzeugung und Übertragung wenigstens eines Clocksignals an die Datenübertragungseinheit aufweist und die lokale Oszillatoreinheit an wenigstens der anderen physikalischen Schnittstelle ein Mittel zum Empfang des wenigstens einen über die Datenübertragungseinheit übertragbaren Clocksignals sowie ein Mittel zur Synchronisation der lokalen Systemzeiten auf Basis des empfangenen Clocksignals aufweist, sowie- einem jeweils seitens der die Daten empfangenden physikalischen Schnittstelle vorgesehenen Zwischenspeicher, in den die vermittels der Datenübertragungseinheit übertragenen Daten temporär zwischenspeicherbar sind.

Daher ist es Aufgabe der vorliegenden Erfindung gegenüber dem genannten Stand der Technik einen Signalübertrager bereitzustellen, welcher eine Miniaturisierung ermöglicht ohne die Zuverlässigkeit der Signalübertragung zu gefährden.

Die zuvor genannte Aufgabe wird erfindungsgemäß mit einem Signalübertrager gemäß dem unabhängigen Anspruch 1 gelöst.

Der erfindungsgemäße Signalübertrager eignet sich sowohl für die unidirektionale Übertragung eines digitalen elektrischen Signals von dem stehenden Teil zu dem bewegbaren Teil bzw. in umgekehrter Richtung als auch in einer Ausführungsform zur bidirektionalen Übertragung von digitalen elektrischen Signalen in beiden Richtungen.

Ein digitales Signal ist in einer Ausführungsform ein binäres oder ternäres Signal.

Im Sinne der vorliegenden Anmeldung werden alle Elemente, welche auf der stehenden Seite, d.h. an dem stehenden Teil vorgesehen sind, als stehend bezeichnet. Alle Elemente, welche auf der bewegbaren Seite vorgesehen sind, werden als bewegbar bezeichnet. Ist das bewegbare Teil ein drehbares Teil, so werden alle Elemente, welche auf der drehbaren Seite vorgesehen sind, als drehbar bezeichnet. Bspw. wird ein Datenratenwandler, der auf der stehenden Seite an dem stehenden Teil angeordnet ist, als stehender Datenratenwandler bezeichnet, und ein Datenratenwandler, der auf der drehbaren Seite angeordnet ist, wird als drehbarer Datenratenwandler bezeichnet. Ein Datenratenwandler, der auf der drehbaren Seite angeordnet ist, wird beispielsweise als drehbarer Datenratenwandler bezeichnet.

Entscheidend für die vorliegende Erfindung ist, dass das stehende Teil und das bewegbare Teil relativ zueinander bewegbar sind. In einer Ausführungsform der Erfindung ist auch das stehende Teil gegenüber einem dritten, nicht zur beanspruchten Erfindung gehörenden Element relativ bewegbar.

Um eine Bidirektionalität zu gewährleisten verfügt der erfindungsgemäße Signalübertrager über eine erste Übertragungsstrecke, welche eine kapazitive Kopplung zwischen der ersten stehenden Übertragungsstruktur des stehenden Teils und der ersten Übertragungsstruktur des bewegbaren Teils umfasst, um ein Signal von dem stehenden Teil zu dem bewegbaren Teil zu übertragen. Die zweite ebenfalls kapazitive Übertragungsstrecke dient der Übertragung eines Signals von dem bewegbaren Teil zu dem stehenden Teil und umfasst eine kapazitive Kopplung zwischen der zweiten bewegbaren Übertragungsstruktur und der zweiten stehenden Übertragungsstruktur. In einer Ausführungsform der Erfindung umfasst das stehende Teil eine zweite stehende Übertragungsstruktur und das bewegbare Teil umfasst eine zweite bewegbare Übertragungsstruktur, wobei die zweite stehende Übertragungsstruktur und die zweite bewegbare Übertragungsstruktur angeordnet sind, so dass sie eine zweite kapazitive Übertragerstrecke für ein Signal von dem stehenden Teil zu dem bewegbaren Teil bilden, wobei die stehende Umsetzeinrichtung galvanisch mit der zweiten stehenden Übertragungsstruktur verbunden ist, wobei die bewegbare Umsetzeinrichtung galvanisch mit der zweiten bewegbaren Übertragungsstruktur verbunden ist, und wobei die stehende Umsetzeinrichtung und die bewegbare Umsetzeinrichtung jeweils derart eingerichtet sind, dass sie in dem Betrieb des Signalübertragers aus einem digitalen Ursprungssignal ein digitales Übertragungssignal mit einem gegenüber dem Ursprungssignal verringerten Gleichspannungsanteil erzeugen, und das Ursprungssignal aus dem Übertragungssignal aus dem Übertragungssignal wiederherstellen.

In einer Ausführungsform der Erfindung sind die erste und die zweite Übertragungsstruktur des stehenden Teils und des drehbaren Teils an unterschiedlichen radialen Positionen jedoch an der gleichen axialen Position angeordnet.

Die stehende Schnittstelle und die bewegbare Schnittstelle ermöglichen die Verbindung des Signalübertragers mit anderen Elementen, die außerhalb des Signalübertragers liegen, d.h. die nicht zum Signalübertrager gehören, bspw. Komponenten eines Datennetzwerks. Die stehende Schnittstelle und die bewegbare Schnittstelle sind in einer Ausführungsform der Erfindung Netzwerkanschlüsse, und umfassen insbesondere jeweils eine Ethernet-Buchse.

Wenn im Sinne der vorliegenden Anmeldung davon die Rede ist, dass zwei Elemente galvanisch miteinander verbunden sind, so bedeutet dies, dass die Elemente nicht kapazitiv über einen Kondensator aus jeweils einer stehenden und einer bewegbaren Kopplungsstruktur miteinander gekoppelt sind, sondern unmittelbar.

Der vorliegenden Erfindung liegt die im Folgenden beschriebene Idee zugrunde. Die fehlerlose digitale Datenübertragung, d.h. die Übertragung von Information mittels eines digitalen elektrischen Signals über eine berührungslose, kapazitive Kopplung zwischen zwei voneinander beabstandeten und daher gegeneinander bewegbaren kapazitiven Kopplungsstrukturen setzt voraus, dass für eine gegebene Datenrate eine ausreichend große Kapazität des von den Kopplungsstrukturen gebildeten Kondensators bereitgestellt wird. Anderenfalls kommt es zu einer vollständigen Aufladung des Kondensators bei bestimmten Betriebsbedingungen und die Signalübertragung wird gestört. Verkleinert man nun den Bauraum, insbesondere einen radialen Bauraum, d.h. beispielsweise nicht nur den Durchmesser der Kopplungsstrukturen, sondern auch ihre Breite in radialer Richtung, so verringert sich auch die Kapazität des jeweiligen von zwei Kopplungsstrukturen gebildeten Kondensators. Bei einer solchen Miniaturisierung des Signalübertragers ist eine fehlerfreie Übertragung von digitalen elektrischen Signalen zwischen dem stehenden Teil und dem bewegbaren Teil nicht mehr möglich, da nicht genügend Fläche für die Kopplungsstrukturen bereitsteht. Zur Lösung dieses Problems sieht der Signalübertrager gemäß der vorliegenden Erfindung vor, dass die berührungslose Datenübertragung innerhalb des Signalübertragers mit einem digitalen Übertragungssignal erfolgt. Dieses Übertragungssignal hat eine gegenüber dem ursprünglich von einer der Schnittstellen von außen erhaltenen digitalen Signal (dieses wird in der vorliegenden Anmeldung auch als Ursprungssignal bezeichnet) einen verringerten Gleichspannungsanteil. Zum Umsetzen des Ursprungssignals in das Übertragungssignal und zur Wiederherstellung des Ursprungssignals aus dem Übertragungssignal dienen die stehenden und bewegbaren Umsetzeinrichtungen.

Dabei gibt es grundsätzlich zumindest zwei Möglichkeiten die Reduzierung des Gleichspannungsanteils zu bewirken. Zum einen kann das Übertragungssignal eine höhere Datenrate aufweisen als das Ursprungssignal. Durch die Erhöhung der Datenrate wird auch bei Verringerung der Kapazität der von den Kopplungsstrukturen gebildeten Kondensatoren eine Ladungssättigung vermieden. Zum anderen kann das Übertragungssignal alternativ oder zusätzlich zu der erhöhten Datenrate durch Umcodieren einen geringeren Gleichspannungsanteil aufweisen als das Ursprungssignal.

Zur Veranschaulichung des Effekts einer Erhöhung der Datenrate betrachtet man ein Fast-Ethernet-Signal mit 125 MBit/s. Bei einem Fast-Ethernet-Signal hat dann 1 Bit eine zeitliche Dauer von 8 ns. Maximal können im Fast-Ethernet-Standard fünf aufeinanderfolgende Bits den gleichen Wert 0 oder 1 aufweisen. Im Falle, dass fünf aufeinanderfolgenden Bits den Wert 1 haben, liegt ein definierter Spannungspegel für max. 40 ns an. Werden die Kapazitäten zu klein, so treibt die Folge von fünf gleichen Bits mit dem Wert 1 den von den Kopplungsstrukturen gebildeten Kondensator in die Sättigung und es wird kein Signal mehr übertragen. Verringert man die Breite bzw. den Radius der Kopplungsstrukturen aufgrund des Bestrebens, einen in der Breite oder in radialer Richtung kleineren Signalübertrager zu bauen, so wird der von den Kopplungsstrukturen gebildeten Kondensator für die 125 MBit/s des Fast-Ethernet-Signals zu einem Hochpass und verhindert eine effektive Übertragung des Fast-Ethernet-Signals.

Wandelt man aber das Ursprungssignal mit der ersten Datenrate in ein Übertragungssignal mit einer zweiten, höheren Datenrate, so kann dieses Signal mit der höheren Datenrate weiterhin fehlerfrei über die von den Kopplungsstrukturen gebildete Kapazität übertragen werden.

Für die Wandlung der Datenrate weisen in einer Ausführungsform sowohl das stehende Teil als auch das bewegbare Teil einen Datenratenwandler auf.

In einer Ausführungsform der Erfindung ist daher die stehende Umsetzeinrichtung ein stehender Datenratenwandler und die bewegbare Umsetzeinrichtung ist ein bewegbarer Datenratenwandler, wobei der stehende Datenratenwandler oder der bewegbare Datenratenwandler derart eingerichtet ist, dass der Datenratenwandler in dem Betrieb des Signalübertragers das Ursprungssignal von der mit dem Datenratenwandler galvanisch verbundenen Schnittstelle erhält, das Ursprungssignal in das Übertragungssignal mit einer zweiten Datenrate wandelt und das Übertragungssignal an eine der ersten Kopplungsstrukturen zur Übertragung über die erste Übertragerstrecke ausgibt, und wobei der jeweils andere Datenratenwandler derart eingerichtet ist, dass der Datenratenwandler in dem Betrieb des Signalübertragers das Übertragungssignal von einer der galvanisch mit dem Datenratenwandler verbundenen ersten Ringelektroden erhält, das Übertragungssignal in das Ursprungssignal wandelt und das Ursprungssignal an die galvanisch mit dem Datenratenwandler verbundene Schnittstelle ausgibt, und wobei die zweite Datenrate größer ist als die erste Datenrate.

In einer Ausführungsform der Erfindung ist die erste Datenrate mindestens 10 mal größer, vorzugsweise mindestens 15 mal größer, besonders bevorzugt mindestens 20 mal größer als die zweite Datenrate. Grundsätzlich ermöglicht eine höhere Datenrate eine Verringerung des Bauraums gegenüber einer niedrigeren Datenrate.

In einer Ausführungsform der Erfindung beträgt die erste Datenrate höchstens 125 MBit/s, d.h. die erste Datenrate folgt maximal dem Fast-Ethernet-Standard, und die zweite Datenrate beträgt mindestens 1 GBit/s, vorzugsweise jedoch mindestens 1,25 GBit/s und besonders bevorzugt mindestens 2 GBit/s.

In einer Ausführungsform der Erfindung umfasst zumindest der stehende Datenratenwandler oder der bewegbare Datenratenwandler einen Multiplexer und der jeweils andere Datenratenwandler zumindest einen Demultiplexer, wobei der Multiplexer eine Mehrzahl von Eingangskanälen und genau einen Ausgangskanal aufweist, wobei die galvanisch mit dem Datenratenwandler verbundene Schnittstelle mit einem aus der Mehrzahl von Eingangskanälen des Multiplexers verbunden ist und der Ausgangskanals des Multiplexers mit einer der galvanisch dem Datenratenwandler verbundenen ersten Kopplungsstrukturen verbunden ist und wobei der Multiplexer derart eingerichtet ist, dass der Ausgangskanal des Multiplexers das Übertragungssignal mit der zweiten Datenrate ausgibt, und wobei der Demultiplexer genau einen Eingangskanal und eine Mehrzahl von Ausgangskanälen aufweist, wobei der Eingangskanal des Demultiplexers mit der galvanisch mit dem Datenratenwandler verbundenen ersten Kopplungsstruktur verbunden ist und wobei der Ausgangskanal des Demultiplexers mit der galvanisch mit dem Datenratenwandler verbundenen Schnittstelle verbunden ist und wobei der Demultiplexer derart eingerichtet ist, dass der Ausgangskanal des Demultiplexers das Ursprungssignal ausgibt. Ein Multiplexer, welcher in der Lage ist, eine Mehrzahl von digitalen Eingangssignalen an seinen Eingangskanälen auf einen einzigen Ausgangskanal zu multiplexen sorgt zwangsweise für die Erhöhung der Datenrate an seinem Ausgangskanal verglichen mit der Datenrate an jedem seiner Eingangskanäle. Die umgekehrte Funktionalität wird von dem entsprechenden Demultiplexer bereitgestellt. Es versteht sich, dass in einer bidirektionalen Variante des erfindungsgemäßen Signalübertragers sowohl der stehende als auch der bewegbare Datenratenwandler jeweils einen Multiplexer und einen Demultiplexer mit der zuvor beschriebenen Funktion aufweist.

Einen solchen Datenratenwandler mit einem Multiplexer und einem Demultiplexer wird auch als einseitiger SerDes (Serialisierer/Deserialisierer) bezeichnet. Insbesondere bei einer Ausführungsform, bei welcher der Datenratenwandler von einem solchen einseitigen SerDes gebildet wird, ist es zweckmäßig, wenn sowohl an dem stehenden Teil als auch an dem bewegbaren Teil jeweils ein solcher Datenratenwandler vorgesehen ist.

In einer Ausführungsform der Erfindung, bei welcher der Datenratenwandler einen Multiplexer und einen Demultiplexer umfasst, werden in einer Ausführungsform ein oder mehrere der weiteren Eingangskanäle bspw. mit zufälligen Bitfolgen belegt, um zu verhindern, dass das serielle Signal zu lange Bitfolgen mit dem gleichen Wert, d.h. Gleichspannungsanteile, aufweist.

In einer Ausführungsform der Erfindung umfasst der stehende Datenratenwandler oder bewegbare Datenratenwandler einen Scrambler und der jeweils andere Datenratenwandler umfasst einen Descrambler, wobei ein Eingangskanal des Scramblers derart mit der galvanisch mit dem Datenratenwandler verbundenen Schnittstelle verbunden ist, dass der Scrambler das Ursprungssignal mit der ersten Datenrate von der Schnittstelle erhält, der Scrambler derart eingerichtet ist, dass der Scrambler in dem Betrieb das Ursprungssignal mit einen Signal mit einer größeren Datenrate als der ersten Datenrate überlagert, so dass ein Zwischensignal mit einer Datenrate, die größer ist als die erste Datenrate, gebildet wird, ein Ausgangskanal des Scramblers derart mit der galvanisch mit dem Datenratenwandler verbundenen ersten Ringelektrode verbunden ist, dass in dem Betrieb des Signalübertragers das Zwischensignal an die erste Ringelektrode ausgegeben wird, ein Eingangskanal des Descramblers derart mit der galvanisch mit dem Datenratenwandler verbundenen ersten Ringelektrode verbunden ist, dass der Descrambler das Zwischensignal von der Ringelektrode erhält, der Descrambler derart eingerichtet ist, das der Descrambler in dem Betrieb aus dem Zwischensignal das Ursprungssignal bildet, und ein Ausgangskanal des Descramblers derart mit der galvanisch mit dem Datenratenwandler verbundenen Schnittstelle verbunden ist, dass die Schnittstelle das Ursprungssignal von dem Descrambler erhält.

Das Scrambling des Signals mit der ersten Datenrate ermöglicht es auf eine einfache Weise, das Zwischensignal mit einer höheren als der ersten Datenrate zu bilden, wobei die Information des Signals mit der ersten Datenrate erhalten bleibt. Eine optionale, zusätzliche Umcodierung dient dann ggf. dazu, Gleichspannungsanteile weiter zu reduzieren oder zu vermeiden. Es versteht sich, dass in einer bidirektionalen Ausführungsform der Erfindung sowohl der stehende als auch der bewegbare Datenratenwandler jeweils einen Scrambler und einen Descrambler aufweist, welche jeweils die zuvor beschriebene Funktionalität aufweisen.

In einer Ausführungsform der Erfindung ist das Zwischensignal das Übertragungssignal mit der zweiten Datenrate, d.h. es erfolgt keine weitere Änderung der Datenrate des Zwischensignals vor der Übertragung über die kapazitive Übertragerstrecke.

Gemäß der Erfindung umfasst der stehende Datenratenwandler oder der bewegbare Datenratenwandler einen Codierer und der jeweils andere Datenratenwandler umfasst einen Decodierer, wobei ein Ausgangskanal des Scramblers derart mit einem Eingangskanal des Codierers verbunden ist, dass der Codierer das Zwischensignal von dem Scrambler erhält, der Codierer derart eingerichtet ist, dass der Codierer in dem Betrieb das Zwischensignal so umcodiert, dass das Übertragungssignal mit der zweiten Datenrate mit einem gegenüber dem Zwischensignal reduzierten Gleichspannungsanteil gebildet wird, ein Ausgangskanal des Codierers derart mit der galvanisch mit dem Datenratenwandler verbundenen ersten Kopplungsstruktur verbunden ist, dass die erste Kopplungsstruktur das Übertragungssignal von dem Codierer erhält, ein Eingangskanal des Decodierers derart mit der galvanisch mit dem Datenratenwandler verbundenen ersten Kopplungsstruktur verbunden ist, dass der Decodierer das Übertragungssignal von der Kopplungsstruktur erhält, der Decodierer derart eingerichtet ist, dass der Decodierer in dem Betrieb das Übertragungssignal von der Kopplungsstruktur so umcodiert, dass das Zwischensignal mit dem gegenüber dem Übertragungssignal erhöhten Gleichspannungsanteil gebildet wird, und ein Ausgangskanal des Decodierers derart mit einem Eingangskanal des Descramblers verbunden ist, dass der Descrambler das Zwischensignal aufnimmt. Die Umcodierung reduziert ggf. statistisch auftretende Gleichspannungsanteile in dem von dem Scrambler generierten Zwischensignal weiter. Es versteht sich, dass in einer bidirektionalen Ausführungsform der Erfindung sowohl der stehende als auch der bewegbare Datenratenwandler jeweils einen Codierer und einen Decodierer aufweist, welche jeweils die zuvor beschriebene Funktionalität aufweisen.

In einer Ausführungsform der Erfindung, bei welcher die Reduzierung des Gleichspannungsanteils des Übertragungssignals verglichen mit dem Ursprungssignals auf einer Umcodierung mit oder ohne zusätzliche Datenratenwandlung beruht, umfasst die stehende Umsetzeinrichtung oder die bewegbare Umsetzeinrichtung einen Codierer und die jeweils andere Umsetzeinrichtung umfasst einen Decodierer, wobei ein Ausgangskanal der mit der Schnittstelle galvanisch verbundenen Umsetzeinrichtung derart mit einem Eingangskanal des Codierers verbunden ist, dass der Codierer in dem Betrieb des Signalübertragers das Ursprungssignal von der Schnittstelle erhält, der Codierer derart eingerichtet ist, dass der Codierer in dem Betrieb das Ursprungssignal derart umcodiert, dass das Übertragungssignal mit der ersten Datenrate und mit einem gegenüber dem Ursprungssignal reduzierten Gleichspannungsanteil gebildet wird, ein Ausgangskanal des Codierers derart mit der galvanisch mit der Umsetzeinrichtung verbundenen ersten Kopplungsstruktur verbunden ist, dass die erste Kopplungsstruktur das Übertragungssignal von dem Codierer erhält, ein Eingangskanal des Decodierers derart mit der galvanisch mit der Umsetzeinrichtung verbundenen ersten Kopplungsstruktur verbunden ist, dass der Decodierer das Übertragungssignal von der Kopplungsstruktur erhält, der Decodierer derart eingerichtet ist, dass der Decodierer in dem Betrieb das Übertragungssignal so umcodiert, dass Ursprungssignal wiederhergestellt wird, und ein Ausgangskanal des Decodierers derart mit der mit der Umsetzeinrichtung verbundenen Schnittstelle verbunden ist, dass die Schnittstelle das Ursprungssignal von dem Decodierer aufnimmt. Es versteht sich, dass in einer bidirektionalen Ausführungsform der Erfindung sowohl die stehende als auch die bewegbare Umsetzeinrichtung jeweils einen Codierer und einen Decodierer aufweist, welche jeweils die zuvor beschriebene Funktionalität aufweisen.

Gemäß der Erfindung ist das bewegbare Teil ein um eine Drehachse gegenüber dem stehenden Teil drehbares Teil, wobei die erste stehende Kopplungsstruktur oder die erste bewegbare Kopplungsstruktur mindestens ein erstes und ein zweites Paar von teilkreisringförmigen Elektrodenabschnitten umfasst, wobei die teilkreisförmigen Elektrodenabschnitte eines jeden Paars auf jeweils einem konzentrisch um die Drehachse angeordneten Kreis liegen, wobei die andere Kopplungsstruktur ein Paar von Elektroden aufweist und wobei das Paar von Elektroden zumindest radial oder axial von dem ersten und zweiten Paar von Elektrodenabschnitten beabstandet ist.

Dabei liegt ein Elektrodenabschnitt des ersten Paars von Elektrodenabschnitten auf einem ersten und ein Elektroden Abschnitt des ersten Paars liegt auf einem zweiten zu der Drehachse konzentrischen Kreis. Ein Elektrodenabschnitt des zweiten Paars von Elektrodenabschnitten liegt ebenfalls auf dem ersten Kreis und ein Elektrodenabschnitt des zweiten Paars liegt auf dem zweiten Kreis. Dabei sind die beiden Elektrodenabschnitte des ersten und des zweiten Paars elektrisch voneinander getrennt, so dass sich jeder Elektrodenabschnitt über etwa 180° erstreckt. Die Elektrodenabschnitte der beiden Paare von Elektrodenabschnitten ergänzen sich zu etwa 360°. Die Teilkreisform ermöglicht eine kapazitive Kopplung zwischen den ersten Kopplungsstrukturen während einer vollständigen Drehung des stehenden Teils gegenüber dem drehbaren Teil.

Das Paar von Elektroden der jeweils anderen ersten Kopplungsstruktur kommt hingegen mit einer Erstreckung von weniger als 180° Grad aus.

Es versteht sich, dass in einer bidirektionalen Ausführungsform die zweiten Kopplungsstrukturen des stehenden Teils oder des drehbaren Teils zumindest in einer Ausführungsform den gleichen Aufbau haben wie zuvor beschrieben.

In einer Ausführungsform sind das erste und das zweite Paar von teilkreisförmigen Elektrodenabschnitten beide an einer ersten axialen Position angeordnet und an voneinander beabstandeten ersten und zweiten radialen Positionen angeordnet, wobei das Paar von Elektroden an einer zweiten axialen Position und an den ersten und zweiten radialen Positionen angeordnet sind.

In einer Ausführungsform der Erfindung weisen die erste stehende Kopplungsstruktur oder die erste bewegbare Kopplungsstruktur mit dem ersten und dem zweiten Paar von teilkreisförmigen Elektrodenabschnitten eine Breite in radialer Richtung von 15 mm oder weniger auf.

In einer Ausführungsform der Erfindung weist der Signalübertrager ein Gehäuse mit einer Gehäuseaußenwandfläche auf, wobei das Gehäuse die Ringelektroden konzentrisch umgibt und wobei die Gehäuseaußenwandfläche einen Durchmesser von 150 mm oder weniger, vorzugsweise 140 mm oder weniger und besonders bevorzugt von 120 mm oder weniger aufweist. Derartige Bauräume in radialer Richtung des Signalübertragers tragen einer angestrebt Miniaturisierung der Maschinen, in denen der Signalübertrager zum Einsatz kommt, Rechnung.

In einer Ausführungsform der vorliegenden Erfindung weist der Signalübertrager einen Fluidkanal zum Überführen eines Fluid von dem stehenden Teil zu dem drehbaren Teil auf, wobei der Fluidkanal eine die Drehachse konzentrisch umgebende Innenwandfläche mit einem Durchmesser von 40 mm oder weniger aufweist. In einer solchen Ausführungsform dient der Signalübertrager nicht nur der Übertragung von Informationen in Form von digitalen elektrischen Signalen, sondern zusätzlich auch zum Übertragen eines Betriebsmittels in Form eines Fluids von dem stehenden Teil zu dem drehbaren Teil oder umgekehrt.

Weitere Vorteile, Merkmale und Anwendungsmöglichkeiten der vorliegenden Erfindung werden anhand der folgenden Beschreibung von Ausführungsformen und der dazugehörigen Figuren deutlich. In den Figuren sind gleiche Elemente mit gleichen Bezugszeichen bezeichnet.
- Figur 1: ist eine schematische Querschnittsansicht durch einen Signalübertrager gemäß einer Ausführungsform der vorliegenden Erfindung.
- Figur 2: ist eine Draufsicht auf das stehende Teil des Signalübertragers auf Figur 1 mit zwei Kopplungsstrukturen.
- Figur 3: ist eine schematische Darstellung der Datenratenwandlung gemäß einer ersten Ausführungsform des Signalübertragers aus Figur 1.
- Figur 4: ist eine schematische Darstellung der Datenratenwandlung gemäß einer zweiten Ausführungsform des Signalübertragers aus Figur 1.

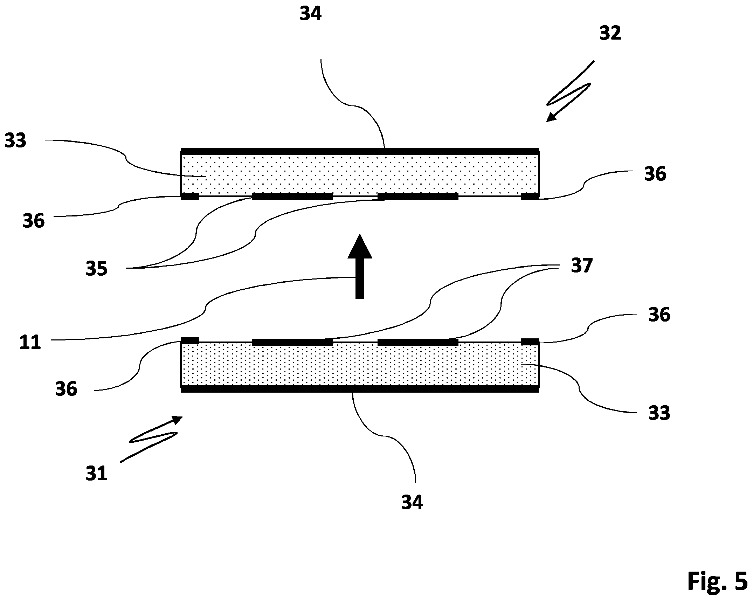

- Figur 5: ist eine schematische Darstellung der Elektroden der Kopplungsstrukturen aus den Figuren 1 und 2.

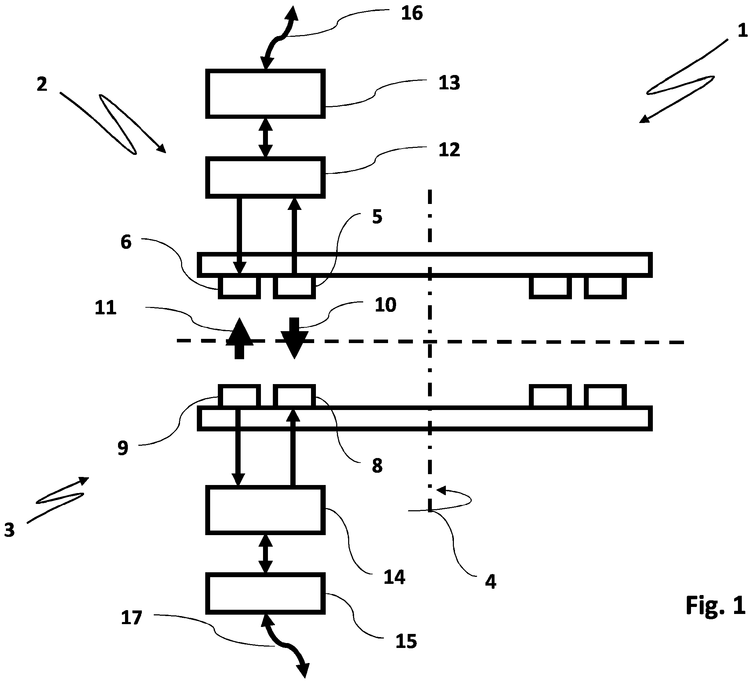

Der erfindungsgemäße Signalübertrager 1 aus Figur 1 dient der bidirektionalen Übertragung von in digitalen Signalen codierter Information zwischen einem stehenden Teil 2 und einem drehbaren Teil 3. Das drehbare Teil 3 ist um eine Drehachse 4 gegenüber dem stehenden Teil 2 drehbar. In der dargestellten Ausführungsform dient der Signalübertrager 1 der Übertragung von Information aus einem Teil 2 eines Roboterarms in einen gegenüber diesem Teil 2 drehbaren Teil 3 des gleichen Roboterarms und in der Gegenrichtung.

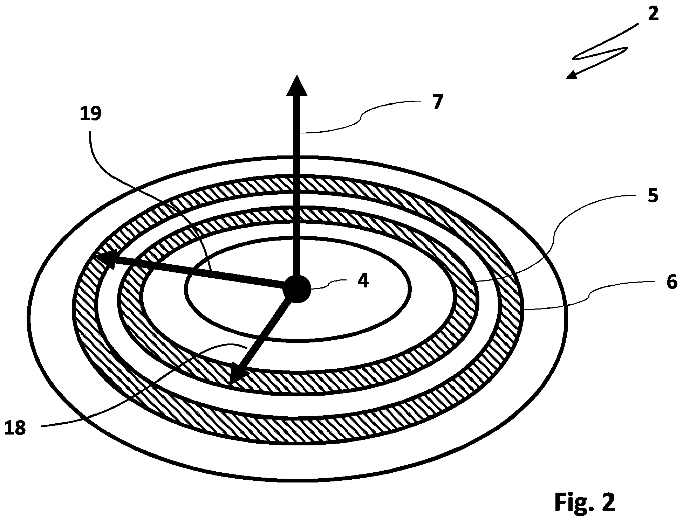

Der stehende Teil 2 weist eine erste Kopplungsstruktur 5 und eine zweite Kopplungsstruktur 6 auf. Diese beiden Kopplungsstrukturen 5, 6 sind konzentrisch um die Drehachse 4 angeordnet. Diese Anordnung der Kopplungsstrukturen ist in der Draufsicht auf das stehende Teil 2 aus Figur 2 gut zu erkennen. Jede der Kopplungsstrukturen hat eine in radialer Richtung 7 definierte radiale Erstreckung oder Breite b und ist in einem radialen Abstand 18, 19 von der Drehachse 4 angerordnet. Der Radiale Abstand ist der mittlere Abstand der jeweiligen Kopplungsstruktur von der Drehachse 4.

Der drehbare Teil 3 weist eine zu den stehenden Kopplungsstrukturen 5, 6 des stehenden Teils 2 komplementäre Anordnung mit zwei Kopplungsstrukturen 8, 9 auf. Auch das drehbare Teil 3 hat eine erste Kopplungsstruktur 8 und eine zweite Kopplungsstruktur 9. Die Kopplungsstruktur 5, 6, 8, 9 bilden paarweise eine kapazitive Übertragungsstrecke für elektrische Signale zwischen dem stehenden Teil 2 und dem drehbaren Teil 3. Dabei bilden die ersten Kopplungsstrukturen 5, 8 des stehenden Teils 2 und des drehbaren Teils 3 eine erste Übertragungsstrecke 10 für ein Signal von dem stehenden Teil 2 zu dem drehbaren Teil 3. Die zweiten Kopplungsstrukturen 6, 9 des stehenden Teils 2 bzw. des drehbaren Teils 3 bilden zusammen eine zweite kapazitive Übertragungsstrecke 11 für ein Signal von dem drehbaren Teil 3 zu dem stehenden Teil 2.

Die ersten und zweiten Kopplungsstrukturen 5, 6 des stehenden Teils 2 sind galvanisch mit einem Datenratenwandler 12 verbunden. Dieser wird im Sinne der vorliegenden Anmeldung, da er auf der stehenden Seite, d.h. am stehenden Teil angeordnet ist, als stehender Datenratenwandler bezeichnet. Der stehende Datenratenwandler 12 wiederum ist über eine bidirektionale Datenverbindung mit einer stehenden Schnittstelle 13 verbunden.

Auf der drehbaren Seite am drehbaren Teil 3 ist eine dazu analoge Anordnung vorgesehen. Die beiden Kopplungsstrukturen 8, 9 des drehbaren Teils 3 sind galvanisch mit einem drehbaren Datenratenwandler 14 verbunden. Der drehbare Datenratenwandler 14 wiederum ist über eine bidirektionale Datenverbindung galvanisch mit einer drehbaren Schnittstelle 15 verbunden.

Zum besseren Verständnis sind beispielhaft für die ersten stehenden und drehbaren Kopplungsstrukturen 6, 9 des stehenden Teils 2 und des drehbaren Teils 3 die Sendestruktur 31 bzw. Empfangsstruktur 32 schematisch dargestellt. Dabei sind die Strukturen 31, 32 im dargestellten Querschnitt zueinander identisch, sie unterscheiden sich jedoch in ihrer Erstreckung in Umfangsrichtung (d.h. in ihrer Draufsicht entgegen der Pfeilrichtung 11).

Jede der Strukturen 31, 32 besteht aus einem dielektrischen Träger 33, welcher mit Metallisierungen zum Ausbilden der Kapazität versehen ist. Sowohl die Sendestruktur 31 als auch die Empfangsstruktur 32 weisen jeweils eine Massefläche 34 als Bezugsreferenz für die Impedanz der jeweiligen Struktur auf. Die Masseflächen 34 sind auf den der Übertragungsstrecke 11 abgewandten Seite des jeweiligen Dielektrikums 33 vorgesehen. Zueinander hin zeigen hingegen die eigentlichen Strukturbahnen 35, 37 für die differenzielle kapazitive Übertragung der Signale sowie seitliche Masseflächen 36 zur Abschirmung der Kopplungsstrukturen gegenüber den benachbarten Kopplungsstrukturen 5, 8.

In Umfangsrichtung erstreckt sich ein Paar von Elektroden 35 als Strukturbahnen der Empfangsstruktur 32 über einen Winkel von etwa 30°. Dabei ist die Erstreckung in Umfangsrichtung von der zu übertragenden Datenrate sowie dem Durchmesser der Kreise, auf denen die Elektroden 35 liegen abhängig. Hingegen erstrecken sich jeweils die teilkreisförmigen Elektrodenabschnitte 37 der Sendestruktur 31 über etwa 180°. Auf dieser Weise ergänzen sich die ersten und zweiten Paare von Elektrodenabschnitten zu jeweils 360°. Allerdings ist jede der Elektroden der Sendestruktur 31 zweimal unterbrochen, sodass nur die jeweiligen Elektrodenabschnitte der beiden Paare von Strukturbahnen 36 zusammen den Kreis von 360° fast vollständig abdecken.

Die Schnittstellen 13, 15 dienen dazu, den Signalübertrager 1 auf der stehenden Seite bzw. auf der drehbaren Seite jeweils mit einem herkömmlichen Datennetzwerk 16, 17 zu verbinden. Bei den Datennetzwerken 16, 17 auf der stehenden bzw. drehbaren Seite handelt sich in der gezeigten Ausführungsform um herkömmliche Fast-Ethernet-Netzwerke. Entsprechend stellen die beiden Schnittstellen 13, 15 jeweils eine genormten Anschlussbuchse für Fast-Ethernet bereit, um den Signalübertrager in die Netzwerke 16, 17 einzubinden, bzw. diese beiden Netzwerke 16, 17 miteinander zu verbinden.

Die erfindungsgemäße Realisierung des Signalübertragers 1 ermöglicht es, diesen in seiner radialen Erstreckung 7 zu miniaturisieren. Eine radiale Miniaturisierung zieht automatisch nach sich, dass sich der mittlere Radius 18, 19 der Kopplungsstruktur 5, 6, 8, 9 verringert und auch deren Breite b reduziert werden muss. Mit einer solchen Verringerung der Fläche der Kopplungsstruktur 5, 6, 8, 9 ist allerdings auch eine Verringerung der Kapazität der von den Kopplungsstruktur 5, 8 bzw. 6, 9 paarweise gebildeten Kondensatoren verbunden. Verringert man bei einer gegebenen Datenrate der Netzwerke 16, 17, die über den Signalübertrager 1 miteinander verbunden werden sollen, die Kapazität der kapazitiven Übertragungsstrecken 10, 11, so wirken diese als Hochpassfilter. Während ein Fast-Ethernet-Signal mit einer Datenrate von 125 MBit/s bei einem radial großen Signalübertrager 1 problemlos über die kapazitiven Übertragungsstrecken 10, 11 übertragen werden könnte, kommt es bei einer zunehmenden Miniaturisierung, insbesondere dann, wenn wie in der vorgesehenen Ausführungsform die ganze Anordnung in ein Gehäuse mit einer Gehäuseaußenwandfläche mit einem Durchmesser von 120 mm passen soll, zu einer zunehmend fehlerhaften Datenübertragung über die kapazitiven Übertragungsstrecken 10, 11.

Daher dienen die Datenratenwandler 12, 14 erfindungsgemäß dazu, die Datenrate der über die ersten und zweiten Übertragungsstrecken 10, 11 übertragenen Signale heraufzusetzen bzw. vor der Ankopplung an die beiden Fast-Ethernet-Datennetzwerke 16, 17 wieder herunter zu setzen.

Betrachtet man ein digitales elektrisches Signal mit einer ersten Datenrate von 125 Mbit/s welches von dem Datennetzwerk 16 auf der stehenden Seite in das Datennetzwerk 17 auf der drehbaren Seite zu übertragen ist, so wird dieses Ursprungssignal zunächst über die stehende Schnittstelle 13 auf den stehenden Datenratenwandler 12 gegeben. Dort wird in der dargestellten Ausführungsform die Datenrate des Signals von 125 MBit/s (Fast-Ethernet) auf 1,25 GBit/s heraufgesetzt und dann dieses Übertragungssignal mit der heraufgesetzten Datenrate über die erste Kopplungsstruktur 5 des stehenden Teils 2, die erste kapazitive Übertragungsstrecke 10 und die erste Kopplungsstruktur 8 des drehbaren Teils 3 in den drehbaren Datenratenwandler 14 gegeben. Dort wird dieses Übertragungssignal erneut in seiner Datenrate gewandelt, jedoch wird diesmal die Datenrate von 1,25 GBit/s auf 125 MBit/s herabgesetzt und das Ursprungssignal wiederhergestellt. So kann das zwischen dem stehenden Teil 2 und dem drehbaren Teil 3 übertragene Signal wieder in seiner ursprünglichen Form über die drehbare Schnittstelle 15 in das Datennetzwerk 17 auf der drehbaren Seite eingespeist werden kann. Eine analoge Funktion ist gegeben für Ursprungssignale, welche von dem drehbaren Datennetzwerk 17 zu dem stehenden Datennetzwerk 16 zu übertragen sind. Es versteht sich, dass diese über die zweite Übertragungsstrecke 11 kapazitiv übertragen werden.

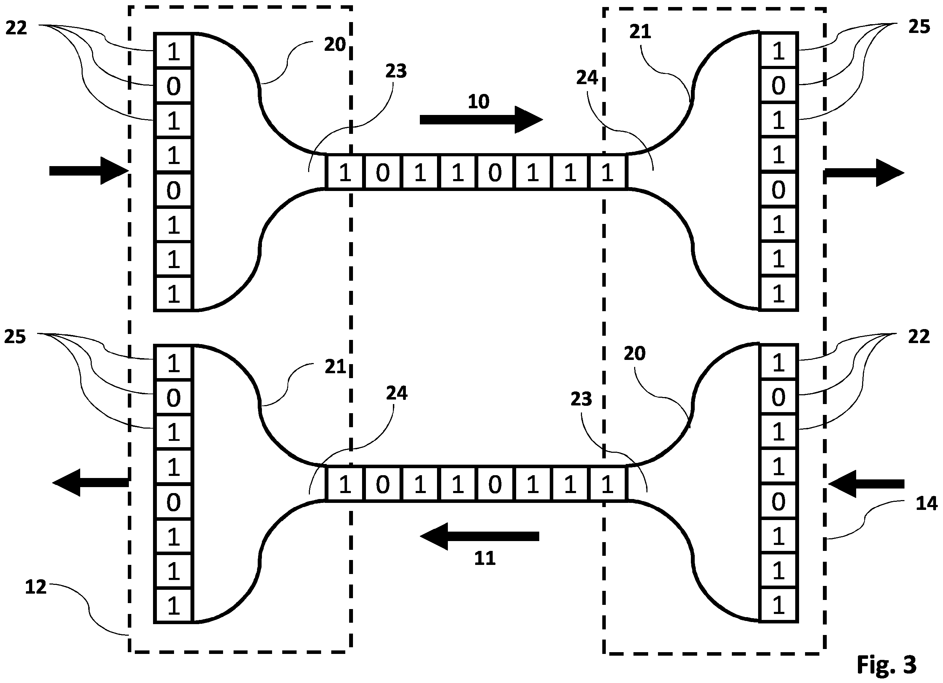

Für die Datenratenwandlung in den Datenratenwandlern 12, 14 gibt es eine Vielzahl von Möglichkeiten. Figur 3 zeigt schematisch eine Darstellung des stehenden Datenratenwandlers 12 und des drehbaren Datenratenwandlers 14 mit den dazwischen liegenden, hier nur angedeuteten ersten und zweiten kapazitiven Übertragungsstrecken 10, 11. Die stehenden und drehbaren Datenratenwandler 12, 14 bestehen jeweils aus einem Serialisierer/Multiplexer 20 und einem Deserialisierer/Demultiplexer 21, sodass der Serialisierer 20 des stehenden Datenratenwandlers 12 und der Deserialisierer 21 des drehbaren Datenratenwandlers 14 zusammen einen SerDes bilden. Gleichzeitig bilden auch der Serialisierer 20 des drehbaren Datenratenwandlers 14 und der Deserialisierer 21 des stehenden Datenratenwandlers 12 zusammen einen SerDes. Jeder der Serialisierer oder Multiplexer 20 weist eine Mehrzahl von Eingangskanälen 22 und genau einen Ausgangskanal 23 auf. Umgekehrt verfügt jeder der Deserialisierer oder der Demultiplexer 21 über genau einen Eingangskanal 24 und eine Mehrzahl von Ausgangskanälen 25.

Die Funktionalität jeder dieser SerDes-Schnittstellen wird nun anhand eines Ursprungssignals beschrieben, welches von dem Datennetzwerk 16 auf der stehenden Seite zu dem Datennetzwerk 17 auf der drehbaren Seite zu übertragen ist. Das von der Schnittstelle 13 kommende Ursprungssignal mit der ersten Datenrate von 125 MBit/s wird in einen einzigen der Eingangskanäle 22 des Serialisierers 20 eingespeist. Die übrigen Eingangskanäle 22 werden mit quasi zufälligen Datenströmen belegt. Der Serialisierer überträgt dann die gleichzeitig an den Eingangskanälen 22 anliegenden Bits seriell, d.h. zeitlich nacheinander über seinen Ausgangskanal 23. Da keine Datenverluste auftreten sollen, ist die zweite Datenrate des Übertragungssignals am Ausgangskanal 23 des Serialisierers 20 höher als die jeweiligen Datenraten an den Eingangskanälen 22. Der Deserialisierer 21 auf der Seite des drehbaren Datenratenwandlers 14 zerlegt die serielle Folge der Bits der einzelnen Kanäle wieder so, dass sie von dort an den Ausgangskanälen 25 des Deserialisierers zeitlich parallel mit der ersten Datenrate abgegeben werden. Der erste Ausgangskanal 25 dient der Weiterleitung des Ursprungssignals an die drehbare Schnittstelle 15.

Das zweite Paar von Serialisierern 20 und Deserialisierern 21 zur Übertragung von Signalen von dem drehbaren Datennetzwerk 17 zu dem stehenden Datennetzwerk 16 über die zweite Übertragungstrecke 11 hat die gleiche Funktionalität wie zuvor beschrieben.

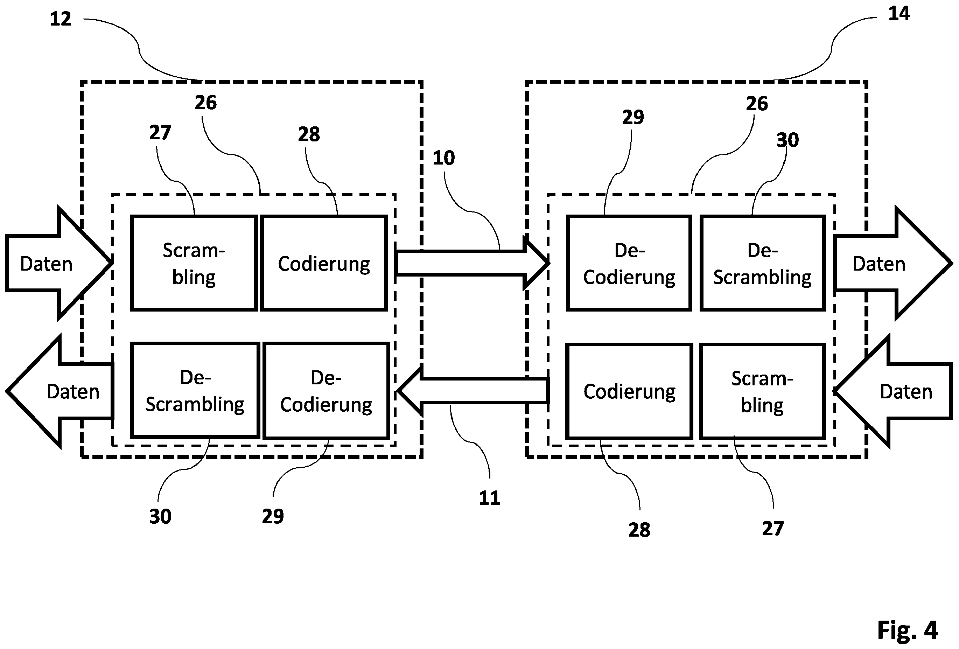

Figur 4 zeigt eine alternative Ausführungsform des Paars aus dem stehenden und dem drehbaren Datenratenwandlern 12, 14. Dabei sind die Datenratenwandler 12, 14 als Field Programmable Gate Arrays (FPGAs) 26 realisiert. Jeder der FPGAs 26 umfasst einen Scrambler 27, einen Codierer 28 für den Versand von Signalen sowie einen Decodierer 29 und einen Descrambler 30 für den Empfang von Signalen.

Die Funktionalität auch dieser Ausführungsform der Datenratenwandler 12, 14 wird nun wieder anhand eines Ursprungssignals betrachtet, welches von dem stehenden Datennetzwerk 16 zu dem drehbaren Datennetzwerk 17 übertragen werden soll. In dem Scrambler 27 des stehenden Datenratenwandlers 12 wird dem Ursprungssignal mit der ersten 125 MBit/s-Datenrate des Fast-Ethernet-Datennetzwerks 16 ein Signal mit einer höheren Datenrate überlagert, sodass das über die erste kapazitive Übertragungsstrecke 10 zu übertragende Übertragungssignal mit der zweiten Datenrate von 1,25 GBit/s erzeugt wird. Aufgrund des Überlagerungsprozesses in dem Scrambler 27 kann das so generierte Signal mit der zweiten Datenrate noch einen großen Gleichspannungsanteil enthalten, da nicht vermieden werden kann, dass eine Vielzahl von unmittelbar aufeinanderfolgenden Bits den gleichen Wert aufweisen und so für eine begrenzte zeitliche Dauer ein DC-Signal entsteht. Um dies zu vermeiden wird dieses Signal in dem Codierer 28 so umcodiert, dass die Gleichspannungsanteile in zeitlicher Hinsicht reduziert werden. Das so gescrambelte und umcodierte Signal wird in einer ersten kapazitive Übertragungsstrecke 10 zu dem drehbaren Datenratenwandler 14 übertragen. Dort erfolgt in dem Decodierer 29 eine erneute Umcodierung, sodass wieder das Signal mit Gleichspannungsanteilen und mit der zweiten Datenrate erzeugt wird. In dem Descrambler 30 wird dann das Übertragungssignal bei der zweiten, höheren Datenrate wieder in das Fast-Ethernet-Signal mit der ersten Datenrate gewandelt, welches an die drehbare Schnittstelle 15 ausgegeben wird. Die gleiche Funktionalität stellen die Datenratenwandler 14, 12 auch für die umgekehrte Übertragungsrichtung über die zweite kapazitive Übertragungsstrecke 11 bereit.

Für Zwecke der ursprünglichen Offenbarung wird darauf hingewiesen, dass sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

Während die Erfindung im Detail in den Zeichnungen und der vorangehenden Beschreibung dargestellt und beschrieben wurde, erfolgt diese Darstellung und Beschreibung lediglich beispielhaft und ist nicht als Beschränkung des Schutzbereichs gedacht, so wie er durch die Ansprüche definiert wird. Die Erfindung ist nicht auf die offenbarten Ausführungsformen beschränkt.

### Bezugszeichen

- 1: Signalübertrager
- 2: stehende Teil
- 3: drehbare Teil
- 4: Drehachse
- 5: erste stehende Kopplungsstruktur
- 6: zweite stehende Kopplungsstruktur
- 7: radiale Richtung
- 8: erste drehbare Kopplungsstruktur
- 9: zweite drehbare Kopplungsstruktur
- 10,11: kapazitive Übertragungsstrecke
- 12: stehender Datenratenwandler
- 13: stehende Schnittstelle
- 14: drehbarer Datenratenwandler
- 15: drehbare Schnittstelle
- 16, 17: Datennetzwerk
- 18: mittlerer Radius der ersten Kopplungsstruktur
- 19: mittlerer Radius der zweiten Kopplungsstruktur
- 20: Serialisierer
- 21: Deserialisierer
- 22: Eingangskanäle (Serialisierer)
- 23: Ausgangskanal (Serialisierer)
- 24: Eingangskanal (Deserialisierer)
- 25: Ausgangskanäle (Deserialisierer)
- 26: Field Programmable Gate Arrays (FPGAs)
- 27: Scrambler
- 28: Codierer
- 29: Decodierer
- 30: Descrambler
- 31: Sendestruktur
- 32: Empfangsstruktur
- 33: Dielektrikum
- 34: Massefläche
- 35: Elektrode
- 36: seitliche Massefläche
- 37: teilkreisförmiger Elektrodenabschnitt
- b: Breite der Kopplungsstrukturen

## Patentansprüche

1. Signalübertrager (1) zum kapazitiven Übertragen von Information mittels eines digitalen elektrischen Signals zwischen einem stehenden Teil (2) und einem gegenüber dem stehenden Teil (2) bewegbaren Teil (3), wobei der Signalübertrager (1) umfasst
das stehende Teil (2) mit
einer kapazitiven ersten stehenden Kopplungsstruktur (5) und
einer galvanisch mit der ersten stehenden Kopplungsstruktur (5) verbundenen stehenden Schnittstelle (13) und
das bewegbare Teil (3) mit
einer kapazitiven ersten bewegbaren Kopplungsstruktur (8) und
einer galvanisch mit der ersten bewegbaren Kopplungsstruktur (8) verbundenen bewegbaren Schnittstelle (15),
wobei die stehende Schnittstelle (13) und die bewegbare Schnittstelle (15) derart eingerichtet sind, dass sie in einem Betrieb des Signalübertragers (1) ein digitales Ursprungssignal mit einer ersten Datenrate mit jeweils einem Element, das außerhalb des Signalübertragers (1) angeordnet ist, austauschen,
wobei die erste stehende Kopplungsstruktur (5) und die erste bewegbare Kopplungsstruktur (8) voneinander beabstandet angeordnet sind, so dass sie eine erste kapazitive Übertragerstrecke für ein Signal von dem stehenden Teil (2) zu dem bewegbaren Teil (3) bilden, wobei
das stehende Teil (2) eine stehende Umsetzeinrichtung (12) und das bewegbare Teil (3) eine bewegbare Umsetzeinrichtung (14) aufweisen, wobei die stehende Umsetzeinrichtung (12) galvanisch sowohl mit der stehenden Schnittstelle (13) als auch mit der ersten stehenden Kopplungsstruktur (5) verbunden ist, wobei die bewegbare Umsetzeinrichtung (14) galvanisch sowohl mit der bewegbaren
Schnittstelle (15) als auch mit der ersten bewegbaren Kopplungsstruktur (8) verbunden ist,
wobei die stehende Umsetzeinrichtung (12) oder die bewegbare Umsetzeinrichtung (14) einen Codierer und die jeweils andere Umsetzeinrichtung einen Decodierer aufweisen, derart
eingerichtet ist, dass sie in dem Betrieb des Signalübertragers (1) aus dem Ursprungssignal ein digitales Übertragungssignal mit einem gegenüber dem Ursprungssignal verringerten Gleichspannungsanteil über den Codierer erzeugt, und die jeweils andere Umsetzeinrichtung (14) derart eingerichtet ist, dass sie in dem Betrieb des Signalübertragers (1) das Ursprungssignal aus dem Übertragungssignal über den Decodierer wiederherstellt,
wobei das bewegbare Teil (3) ein um eine Drehachse (4) gegenüber dem stehenden Teil (2) drehbares Teil ist,
wobei die erste stehende Kopplungsstruktur (5) oder die erste bewegbare Kopplungsstruktur (6) mindestens ein erstes und ein zweites Paar von teilkreisringförmigen Elektrodenabschnitten (37) umfasst,
wobei die teilkreisförmigen Elektrodenabschnitte (37) eines jeden Paars auf jeweils einem konzentrisch um die Drehachse (4) angeordneten Kreis liegen,
wobei die andere Kopplungsstruktur (6; 9) ein weiteres Paar von Elektroden aufweist und
wobei das weitere Paar von Elektroden zumindest radial oder axial von dem ersten und zweiten Paar von Elektrodenabschnitten (37) beabstandet ist; und wobei
ein Elektrodenabschnitt des ersten Paars von Elektrodenabschnitten auf einem ersten und ein Elektrodenabschnitt des ersten Paar auf einem zweiten zu der Drehachse konzentrisch angeordneten Kreis liegt und ein Elektrodenabschnitt des zweiten Paars von Elektrodenabschnitten auf dem ersten Kreis und ein Elektrodenabschnitt des zweiten Paars liegt auf dem zweiten Kreis, so dass die Elektrodenabschnitte des ersten und zweiten Paars elektrisch voneinander getrennt sind und sich jeder der Elektrodenabschnitte über 180° erstreckt.

2. Signalübertrager (1) nach dem vorhergehenden Anspruch, wobei
die stehende Umsetzeinrichtung (12) ein stehender Datenratenwandler (12) ist und die bewegbare Umsetzeinrichtung (14) ein bewegbarer Datenratenwandler (14) ist, wobei der stehende Datenratenwandler (12) oder der bewegbare Datenratenwandler (14) derart eingerichtet ist,
dass der Datenratenwandler (12; 14) in dem Betrieb des Signalübertragers (1) das Ursprungssignal von der mit dem Datenratenwandler (12; 14) galvanisch verbundenen Schnittstelle (13; 15) erhält, das Ursprungssignal in das Übertragungssignal mit einer zweiten Datenrate wandelt und das Übertragungssignal an eine der ersten Kopplungsstrukturen (5; 8) zur Übertragung über die erste Übertragerstrecke (10) ausgibt, und
wobei der jeweils andere Datenratenwandler (12; 14) derart eingerichtet ist,
dass der andere Datenratenwandler (12; 14) in dem Betrieb des Signalübertragers (1) das Übertragungssignal von einer der galvanisch mit dem Datenratenwandler (12; 14) verbundenen ersten Kopplungsstrukturen (5; 8) erhält, das Übertragungssignal in das Ursprungssignal wandelt und das Ursprungssignal an die galvanisch mit dem Datenratenwandler (12; 14) verbundene Schnittstelle (13; 15) ausgibt, und
wobei die zweite Datenrate größer ist als die erste Datenrate.

3. Signalübertrager (1) nach dem vorhergehenden Anspruch, wobei die zweite Datenrate mindestens 10 mal größer, vorzugsweise mindestens 15 mal größer und besonders bevorzugt mindestens 20 mal größer ist als die erste Datenrate.

4. Signalübertrager (1) nach Anspruch 2 oder 3, wobei die erste Datenrate höchstens 125 MBit/s beträgt und die zweite Datenrate mindestens 1 GBit/s beträgt.

5. Signalübertrager (1) nach einem der Ansprüche 2 bis 4, wobei der stehende Datenratenwandler (12) oder der bewegbare Datenratenwandler (14) einen Multiplexer (20) umfasst und der jeweils andere Datenratenwandler einen Demultiplexer (21) umfasst,
wobei der Multiplexer (20) eine Mehrzahl von Eingangskanälen (22) und genau einen Ausgangskanal (23) aufweist, wobei die galvanisch mit dem Datenratenwandler (12) verbundene Schnittstelle (13) mit einem aus der Mehrzahl von Eingangskanälen (22) des Multiplexers (20) verbunden ist und der Ausgangskanal (23) des Multiplexers (20) mit der galvanisch mit dem Datenratenwandler (12) verbundenen ersten Kopplungsstruktur (5) verbunden ist und wobei der Multiplexer (20) derart eingerichtet ist, dass der Ausgangskanal (23) des Multiplexers (20) das Übertragungssignal mit der zweiten Datenrate ausgibt, und
wobei der Demultiplexer (21) genau einen Eingangskanal (24) und eine Mehrzahl von Ausganskanälen (25) aufweist, wobei der Eingangskanal (24) des Demultiplexers (21) mit der galvanisch mit dem Datenratenwandler (14) verbundenen ersten Kopplungsstruktur (8) verbunden ist, wobei der Ausgangskanal (25) des Demultiplexers (21) mit der galvanisch mit dem Datenratenwandler (14) verbundenen Schnittstelle (15) verbunden ist und wobei der Demultiplexer (21) derart eingerichtet ist, dass der Ausgangskanal (25) des Demultiplexers (21) das Ursprungssignal ausgibt.

6. Signalübertrager (1) nach einem der Ansprüche 2 bis 4, wobei der stehende Datenratenwandler (12) oder der bewegbare Datenratenwandler (14) einen Scrambler (27) umfasst und der jeweils andere Datenratenwandler (12; 14) einen Descrambler (30) umfasst, wobei
ein Eingangskanal des Scramblers (27) derart mit der galvanisch mit dem Datenratenwandler (12; 14) verbundenen Schnittstelle (13; 15) verbunden ist, dass der Scrambler (27) das Ursprungssignal mit der ersten Datenrate von der Schnittstelle (13; 15) erhält,
der Scrambler (27) derart eingerichtet ist, dass der Scrambler (27) in dem Betrieb das Ursprungssignal mit einen Signal mit einer größeren Datenrate als der ersten Datenrate überlagert, so dass ein Zwischensignal mit einer Datenrate, die größer ist als die erste Datenrate, gebildet wird,
ein Ausgangskanal des Scramblers (27) derart mit der galvanisch mit dem Datenratenwandler verbundenen ersten Kopplungsstruktur verbunden ist, dass in dem Betrieb des Signalübertragers (1) das Zwischensignal an die erste Kopplungsstruktur ausgegeben wird, ein Eingangskanal des Descramblers (30) derart mit der galvanisch mit dem Datenratenwandler verbundenen ersten Kopplungsstruktur verbunden ist, dass der Descrambler (30) das Zwischensignal von der Kopplungsstruktur erhält,
der Descrambler (30) derart eingerichtet ist, das der Descrambler (30) in dem Betrieb aus dem Zwischensignal das Ursprungssignal bildet, und
ein Ausgangskanal des Descramblers (30) derart mit der galvanisch mit dem Datenratenwandler verbundenen Schnittstelle (13; 15) verbunden ist, dass die Schnittstelle (13; 15) das Ursprungssignal von dem Descrambler (30) erhält.

7. Signalübertrager (1) nach dem vorhergehenden Anspruch, wobei
das Zwischensignal das Übertragungssignal mit der zweiten Datenrate ist.

8. Signalübertrager (1) nach Anspruch 6, wobei der stehende Datenratenwandler (12) oder der bewegbare Datenratenwandler (14) einen Codierer (28) umfasst und der jeweils andere Datenratenwandler einen Decodierer (29) umfasst, wobei
ein Ausgangskanal des Scramblers (27) derart mit einem Eingangskanal des Codierers (28) verbunden ist, dass der Codierer (28) das Zwischensignal von dem Scrambler (27) erhält,
der Codierer (28) derart eingerichtet ist, dass der Codierer (28) in dem Betrieb das Zwischensignal so umcodiert, dass das Übertragungssignal mit der zweiten Datenrate mit einem gegenüber dem Zwischensignal reduzierten Gleichspannungsanteil gebildet wird,
ein Ausgangskanal des Codierers (28) derart mit der galvanisch mit dem Datenratenwandler (12; 14) verbundenen ersten Kopplungsstruktur verbunden ist, dass die erste Kopplungsstruktur das Übertragungssignal von dem Codierer (28) erhält,
ein Eingangskanal des Decodierers (29) derart mit der galvanisch mit dem Datenratenwandler (12; 14) verbundenen ersten Kopplungsstruktur verbunden ist, dass der Decodierer (29) das Übertragungssignal von der Kopplungsstruktur erhält, der Decodierer (29) derart eingerichtet ist, dass der Decodierer (29) in dem Betrieb das Übertragungssignal von der Kopplungsstruktur so umcodiert, dass das Zwischensignal mit dem gegenüber dem Übertragungssignal erhöhten Gleichspannungsanteil gebildet wird, und
ein Ausgangskanal des Decodierers (29) derart mit einem Eingangskanal des Descramblers (30) verbunden ist, dass der Descrambler (30) das Zwischensignal aufnimmt.

9. Signalübertrager (1) nach Anspruch 1, wobei die stehende Umsetzeinrichtung oder die bewegbare Umsetzeinrichtung einen Codierer (28) aufweist und die jeweils andere Umsetzeinrichtung einen Decodierer (29) aufweist, wobei
ein Ausgangskanal der galvanisch mit der Schnittstelle (13, 15) verbundenen Umsetzeinrichtung derart mit einem Eingangskanal des Codierers (28) verbunden ist, dass der Codierer in dem Betrieb des Signalübertragers (1) das Ursprungssignal von der Schnittstelle (13, 15) erhält,
der Codierer (28) derart eingerichtet ist, dass der Codierer (28) in dem Betrieb das Ursprungssignal derart umcodiert, dass das Übertragungssignal mit der ersten Datenrate und mit einem gegenüber dem Ursprungssignal reduzierten Gleichspannungsanteil gebildet wird,
ein Ausgangskanal des Codierers (28) derart mit der galvanisch mit der Umsetzeinrichtung verbundenen ersten Kopplungsstruktur verbunden ist, dass die Kopplungsstruktur das Übertragungssignal von dem Codierer (28) erhält,
ein Eingangskanal des Decodierers (29) derart mit der galvanisch mit der Umsetzeinrichtung verbundenen ersten Kopplungsstruktur verbunden ist, dass der Decodierer (29) das Übertragungssignal von der Kopplungsstruktur erhält,
der Decodierer (29) derart eingerichtet ist, dass der Decodierer (29) in dem Betrieb das Übertragungssignal so umcodiert, dass das Ursprungssignal wiederhergestellt wird, und
ein Ausgangskanal des Decodierers (29) derart mit der mit der Umsetzeinrichtung verbundenen Schnittstelle (13, 15) verbunden ist, dass die Schnittstelle (13, 15) das Ursprungssignal von dem Decodierer (29) aufnimmt.

10. Signalübertrager(1) nach einem der vorhergehenden Ansprüche, wobei
das stehende Teil (2) eine kapazitive zweite stehende Kopplungsstruktur (6) umfasst und
das bewegbare Teil (3) eine kapazitive zweite konzentrisch bewegbare Kopplungsstruktur (9) umfasst,
die zweite stehende Kopplungsstruktur (9) und die zweite bewegbare Kopplungsstruktur voneinander beabstandet angeordnet sind, so dass sie eine zweite kapazitive Übertragerstrecke (11) für ein Signal von dem stehenden Teil (2) zu dem bewegbaren Teil (3) bilden,
die stehende Umsetzeinrichtung (12) galvanisch mit der zweiten stehenden Kopplungsstruktur (6) verbunden ist,
die bewegbare Umsetzeinrichtung (14) galvanisch mit der zweiten bewegbaren Kopplungsstruktur (9) verbunden ist,
wobei die stehende Umsetzeinrichtung (12) und die bewegbare Umsetzeinrichtung (14) jeweils derart eingerichtet sind, dass sie in dem Betrieb des Signalübertragers (1) aus einem digitalen Ursprungssignal ein digitales Übertragungssignal mit einem gegenüber dem Ursprungssignal verringerten Gleichspannungsanteil erzeugen, und das Ursprungssignal aus dem Übertragungssignal aus dem Übertragungssignal wiederherstellen.

11. Signalübertrager (1) nach Anspruch 1, wobei das erste und das zweite Paar von teilkreisförmigen Elektrodenabschnitten (37) beide an einer ersten axialen Position angeordnet sind und die Elektrodenabschnitte eines weiteren Paars von Elektrodenabschnitten an voneinander beanstandeten ersten und zweiten radialen Positionen angeordnet sind und dass das Paar von Elektroden an einer zweiten axialen Position angeordnet sind und die Elektroden des Paars von Elektroden an den ersten und zweiten radialen Positionen angeordnet sind.

12. Signalübertrager (1) nach Anspruch 1 oder 11, wobei die erste stehende Kopplungsstruktur oder die erste bewegbare Kopplungsstruktur mit dem ersten und dem zweiten Paar von teilkreisförmigen Elektrodenabschnitten eine Breite in radialer Richtung von 15 mm oder weniger aufweisen.

13. Signalübertrager (1) nach einem der Ansprüche 1 und 11 bis 12, wobei der Signalübertrager (1) ein Gehäuse mit einer Gehäuseaußenwandfläche aufweist, wobei das Gehäuse die Kopplungsstrukturen (5, 6; 8, 9) konzentrisch umgibt und wobei die Gehäuseaußenwandfläche einen Durchmesser von 150 mm oder weniger, vorzugsweise von 140 mm oder weniger und besonders bevorzugt von 120 mm oder weniger aufweist.

## Claims

1. Signal transmitter (1) for capacitively transmitting information by means of a digital electrical signal between a stationary part (2) and a part (3) movable relative to the stationary part (2), wherein the signal transmitter (1) comprises
the stationary part (2) having
a capacitive first stationary coupling structure (5), and
a stationary interface (13) electrically connected to the first stationary coupling structure (5), and
the movable part (3) having
a capacitive first movable coupling structure (8), and
a movable interface (15) electrically connected to the first movable coupling structure (8),
wherein the stationary interface (13) and the movable interface (15) are configured such that, during operation of the signal transmitter (1), they each exchange a digital original signal at a first data rate with an element arranged outside the signal transmitter (1),
wherein the first stationary coupling structure (5) and the first movable coupling structure (8) are arranged at a distance from one another, so that they form a first capacitive transmitter path for a signal from the stationary part (2) to the movable part (3), wherein
the stationary part (2) has a stationary transfer device (12) and the movable part (3) has a movable transfer device (14), wherein the stationary transfer device (12) is electrically connected both to the stationary interface (13) and to the first stationary coupling structure (5), wherein the movable transfer device (14) is electrically connected both to the movable interface (15) and to the first movable coupling structure (8),
wherein the stationary transfer device (12) or the movable transfer device (14) comprises an encoder and the other transfer device in each case comprises a decoder, is configured such that, during operation of the signal transmitter (1), it generates from the original signal, via the encoder, a digital transmission signal with a reduced DC voltage portion in comparison with the original signal, and the other transfer device (14) in each case is configured such that, during operation of the signal transmitter (1), it restores the original signal from the transmission signal via the decoder,
wherein the movable part (3) has a part which is rotatable about an axis of rotation (4) with respect to the stationary part (2),
wherein the first stationary coupling structure (5) or the first movable coupling structure (6) comprises at least a first and a second pair of partially circular electrode portions (37),
wherein the partially circular electrode portions (37) of each pair are each located on a circle arranged concentrically about the axis of rotation (4),
wherein the other coupling structure (6; 9) comprises a further pair of electrodes, and
wherein the further pair of electrodes is spaced at least radially or axially from the first and the second pair of electrode portions (37); and wherein
one electrode portion of the first pair of electrode portions lies on a first circle arranged concentrically to the axis of rotation and one electrode portion of the first pair lies on a second circle arranged concentrically to the axis of rotation, and one electrode portion of the second pair of electrode portions lies on the first circle and one electrode portion of the second pair lies on the second circle, so that the electrode portions of the first and the second pair are electrically separated from one another and each of the electrode portions extends over 180°.

2. Signal transmitter (1) according to the preceding claim, wherein the stationary transfer device (12) is a stationary data-rate converter (12) and the movable transfer device (14) is a movable data-rate converter (14), wherein the stationary data-rate converter (12) or the movable data-rate converter (14) is configured
such that, during operation of the signal transmitter (1), the data-rate converter (12; 14) receives the original signal from the interface (13; 15) electrically connected to the data-rate converter (12; 14), converts the original signal into the transmission signal at a second data rate, and outputs the transmission signal to one of the first coupling structures (5; 8) for transmission via the first transmitter path (10), and
wherein the other data-rate converter (12; 14) in each case is configured
such that, during operation of the signal transmitter (1), the other data-rate converter (12; 14) receives the transmission signal from one of the first coupling structures (5; 8) connected electrically to the data-rate converter (12; 14), converts the transmission signal into the original signal, and outputs the original signal to the interface (13; 15) electrically connected to the data-rate converter (12; 14), and
wherein the second data rate is greater than the first data rate.

3. Signal transmitter according to the preceding claim, wherein the second data rate is at least 10 times greater, preferably at least 15 times greater and particularly preferably at least 20 times greater, than the first data rate.

4. Signal transmitter (1) according to claim 2 or claim 3, wherein the first data rate is at most 125 Mbit/s, and the second data rate is at least 1 Gbit/s.

5. Signal transmitter (1) according to any of claims 2 to 4, wherein the stationary data-rate converter (12) or the movable data-rate converter (14) comprises a multiplexer (20) and the other data-rate converter in each case comprises a demultiplexer (21),
wherein the multiplexer (20) has a plurality of input channels (22) and exactly one output channel (23), wherein the interface (13) electrically connected to the data-rate converter (12) is connected to one of the plurality of input channels (22) of the multiplexer (20), and the output channel (23) of the multiplexer (20) is connected to the first coupling structure (5) electrically connected to the data-rate converter (12), and wherein the multiplexer (20) is configured such that the output channel (23) of the multiplexer (20) outputs the transmission signal at the second data rate, and
wherein the demultiplexer (21) has exactly one input channel (24) and a plurality of output channels (25), wherein the input channel (24) of the demultiplexer (21) is connected to the first coupling structure (8) electrically connected to the data-rate converter (14), wherein the output channel (25) of the demultiplexer (21) is connected to the interface (15) electrically connected to the data-rate converter (14), and wherein the demultiplexer (21) is configured such that the output channel (25) of the demultiplexer (21) outputs the original signal.

6. Signal transmitter (1) according to any of claims 2 to 4, wherein the stationary data-rate converter (12) or the movable data-rate converter (14) comprises a scrambler (27), and the other data-rate converter (12; 14) in each case comprises a descrambler (30), wherein
an input channel of the scrambler (27) is connected to the interface (13; 15) electrically connected to the data-rate converter (12; 14) such that the scrambler (27) receives the original signal at the first data rate from the interface (13; 15),
the scrambler (27) is configured such that, during operation, the scrambler (27) superimposes the original signal with a signal at a greater data rate than the first data rate, so that an intermediate signal at a data rate that is greater than the first data rate is formed,
an output channel of the scrambler (27) is connected to the first coupling structure electrically connected to the data-rate converter such that, during operation of the signal transmitter (1), the intermediate signal is output to the first coupling structure, an input channel of the descrambler (30) is connected to the first coupling structure electrically connected to the data-rate converter such that the descrambler (30) receives the intermediate signal from the coupling structure,
the descrambler (30) is configured such that, during operation, the descrambler (30) forms the original signal from the intermediate signal, and
an output channel of the descrambler (30) is connected to the interface (13; 15) electrically connected to the data-rate converter such that the interface (13; 15) receives the original signal from the descrambler (30).

7. Signal transmitter (1) according to the preceding claim, wherein the intermediate signal is the transmission signal at the second data rate.

8. Signal transmitter (1) according to claim 6, wherein the stationary data-rate converter (12) or the movable data-rate converter (14) comprises an encoder (28) and the other data-rate converter in each case comprises a decoder (29), wherein
an output channel of the scrambler (27) is connected to an input channel of the encoder (28) such that the encoder (28) receives the intermediate signal from the scrambler (27),
the encoder (28) is configured such that, during operation, the encoder (28) encodes the intermediate signal in such a way that the transmission signal at the second data rate with a reduced DC voltage portion in comparison with the intermediate signal is formed,
an output channel of the encoder (28) is connected to the first coupling structure electrically connected to the data-rate converter (12; 14) such that the first coupling structure receives the transmission signal from the encoder (28),
an input channel of the decoder (29) is connected to the first coupling structure electrically connected to the data-rate converter (12; 14) such that the decoder (29) receives the transmission signal from the coupling structure, the decoder (29) is configured such that, during operation, the decoder (29) encodes the transmission signal from the coupling structure in such a way that the intermediate signal with the increased DC voltage portion in comparison with the transmission signal is formed, and
an output channel of the decoder (29) is connected to an input channel of the descrambler (30) such that the descrambler (30) receives the intermediate signal.

9. Signal transmitter (1) according to claim 1, wherein the stationary transfer device or the movable transfer device comprises an encoder (28) and the other transfer device in each case comprises a decoder (29), wherein
an output channel of the transfer device electrically connected to the interface (13, 15) is connected to an input channel of the encoder (28) such that, during operation of the signal transmitter (1), the encoder receives the original signal from the interface (13, 15),
the encoder (28) is configured such that, during operation, the encoder (28) encodes the original signal such that the transmission signal at the first data rate with a reduced DC voltage portion in comparison with the original signal is formed,
an output channel of the encoder (28) is connected to the first coupling structure electrically connected to the transfer device such that the coupling structure receives the transmission signal from the encoder (28),
an input channel of the decoder (29) is connected to the first coupling structure electrically connected to the transfer device such that the decoder (29) receives the transmission signal from the coupling structure,
the decoder (29) is configured such that, during operation, the decoder (29) encodes the transmission signal in such a way that the original signal is restored, and
an output channel of the decoder (29) is connected to the interface (13, 15) connected to the transfer device such that the interface (13, 15) receives the original signal from the decoder (29).

10. Signal transmitter(1) according to any of the preceding claims, wherein
the stationary part (2) comprises a capacitive second stationary coupling structure (6), and
the movable part (3) comprises a capacitive second concentrically movable coupling structure (9),
the second stationary coupling structure (9) and the second movable coupling structure are arranged at a distance from one another, so that they form a second capacitive transmitter path (11) for a signal from the stationary part (2) to the movable part (3),
the stationary transfer device (12) is electrically connected to the second stationary coupling structure (6),
the movable transfer device (14) is electrically connected to the second movable coupling structure (9),
wherein the stationary transfer device (12) and the movable transfer device (14) are each configured such that, during operation of the signal transmitter (1), they generate from a digital original signal a digital transmission signal with a reduced DC voltage portion in comparison with the original signal, and the original signal is restored from the transmission signal from the transmission signal.

11. Signal transmitter (1) according to claim 1, wherein the first and the second pair of partially circular electrode portions (37) are both arranged at a first axial position and the electrode portions of a further pair of electrode portions are arranged at first and second radial positions spaced apart from one another, and wherein the pair of electrodes are arranged at a second axial position and the electrodes of the pair of electrodes are arranged at the first and second radial positions.

12. Signal transmitter (1) according to claim 1 or claim 11, wherein the first stationary coupling structure or the first movable coupling structure with the first and the second pair of partially circular electrode portions have a width in the radial direction of 15 mm or less.

13. Signal transmitter (1) according to any of claims 1 and 11 to 12, wherein the signal transmitter (1) comprises a housing having a housing outer wall surface, wherein the housing concentrically surrounds the coupling structures (5, 6; 8, 9) and wherein the housing outer wall surface has a diameter of 150 mm or less, preferably of 140 mm or less, and particularly preferably of 120 mm or less.

## Revendications

1. Transmetteur de signaux (1) permettant la transmission capacitive d'informations au moyen d'un signal électrique numérique entre une partie fixe (2) et une partie mobile (3) par rapport à la partie fixe (2), dans lequel le transmetteur de signaux (1) comprend
la partie fixe (2) comportant
une première structure de couplage (5) fixe capacitive et
une interface (13) fixe connectée galvaniquement à la première structure de couplage (5) fixe et
la partie mobile (3) comportant
une première structure de couplage (8) mobile capacitive et
une interface (15) mobile connectée galvaniquement à la première structure de couplage (8) mobile,
dans lequel l'interface (13) fixe et l'interface (15) mobile sont configurées de telle sorte que, lors d'un fonctionnement du transmetteur de signaux (1), elles échangent un signal d'origine numérique comportant un premier débit de données avec respectivement un élément qui est disposé à l'extérieur du transmetteur de signaux (1),
dans lequel la première structure de couplage (5) fixe et la première structure de couplage (8) mobile sont espacées l'une de l'autre de sorte qu'elles forment une première voie de transmetteur capacitive pour un signal de la partie fixe (2) à la partie mobile (3), dans lequel
la partie fixe (2) présente un dispositif de conversion (12) fixe et la partie mobile (3) présente un dispositif de conversion (14) mobile, dans lequel le dispositif de conversion (12) fixe est connecté galvaniquement à la fois à l'interface (13) fixe et à la première structure de couplage (5) fixe, dans lequel le dispositif de conversion (14) mobile est connecté galvaniquement à la fois à l'interface (15) mobile et à la première structure de couplage (8) mobile,
dans lequel le dispositif de conversion (12) fixe ou le dispositif de conversion (14) mobile présente un codeur et l'autre dispositif de conversion respectif présente un décodeur, est configuré de telle sorte qu'il génère, lors du fonctionnement du transmetteur de signaux (1), à partir du signal d'origine, un signal de transmission numérique comportant une composante de tension continue réduite par rapport à celle du signal d'origine par l'intermédiaire du codeur, et l'autre dispositif de conversion (14) respectif est configuré de telle sorte qu'il restaure, lors du fonctionnement du transmetteur de signaux (1), le signal d'origine à partir du signal de transmission par l'intermédiaire du décodeur,
dans lequel la partie mobile (3) est une partie pouvant tourner autour d'un axe de rotation (4) par rapport à la partie fixe (2),
dans lequel la première structure de couplage (5) fixe ou la première structure de couplage (6) mobile comprend au moins une première et une seconde paire de sections d'électrode (37) en forme de cercle partiel,
dans lequel les sections d'électrode (37) en forme de cercle partiel de chaque paire se situent sur respectivement un cercle disposé de manière concentrique autour de l'axe de rotation (4),
dans lequel l'autre structure de couplage (6 ; 9) présente une autre paire d'électrodes et
dans lequel l'autre paire d'électrodes est espacée au moins radialement ou axialement des première et seconde paires de sections d'électrode (37) ; et dans lequel
une section d'électrode de la première paire de sections d'électrode se situe sur un premier cercle disposé de manière concentrique à l'axe de rotation et une section d'électrode de la première paire se situe sur un second cercle disposé de manière concentrique à l'axe de rotation et une section d'électrode de la seconde paire de sections d'électrode se situe sur le premier cercle et une section d'électrode de la seconde paire se situe sur le second cercle, de sorte que les sections d'électrode des première et seconde paires sont électriquement séparées les unes des autres et chacune des sections d'électrode s'étend sur 180°.

2. Transmetteur de signaux (1) selon la revendication précédente, dans lequel le dispositif de conversion (12) fixe est un transformateur de débit de données (12) fixe et le dispositif de conversion (14) mobile est un transformateur de débit de données (14) mobile, dans lequel le transformateur de débit de données (12) fixe ou le transformateur de débit de données (14) mobile est configuré de telle sorte
que, lors du fonctionnement du transmetteur de signaux (1), le transformateur de débit de données (12 ; 14) reçoit le signal d'origine en provenance de l'interface (13 ; 15) connectée galvaniquement au transformateur de débit de données (12 ; 14), transforme le signal d'origine en signal de transmission comportant un second débit de données et délivre en sortie le signal de transmission à l'une des premières structures de couplage (5 ; 8) pour la transmission par l'intermédiaire de la première voie de transmetteur (10), et
dans lequel l'autre transformateur de débit de données (12 ; 14) respectif est configuré de telle sorte
que, lors du fonctionnement du transmetteur de signaux (1), l'autre transformateur de débit de données (12 ; 14) reçoit le signal de transmission en provenance de l'une des premières structures de couplage (5 ; 8) connectées galvaniquement au transformateur de débit de données (12 ; 14), transforme le signal de transmission en signal d'origine et délivre en sortie le signal d'origine à l'interface (13 ; 15) connectée galvaniquement au transformateur de débit de données (12 ; 14), et
dans lequel le second débit de données est supérieur au premier débit de données.

3. Transmetteur de signaux (1) selon la revendication précédente, dans lequel le second débit de données est au moins 10 fois supérieur, de préférence au moins 15 fois supérieur et de manière particulièrement préférée au moins 20 fois supérieur au premier débit de données.

4. Transmetteur de signaux (1) selon la revendication 2 ou 3, dans lequel le premier débit de données est d'au plus 125 Mbit/s et le second débit de données est d'au moins 1 Gbit/s.

5. Transmetteur de signaux (1) selon l'une des revendications 2 à 4, dans lequel le transformateur de débit de données (12) fixe ou le transformateur de débit de données (14) mobile comprend un multiplexeur (20) et l'autre transformateur de débit de données respectif comprend un démultiplexeur (21),
dans lequel le multiplexeur (20) présente une pluralité de canaux d'entrée (22) et exactement un canal de sortie (23), dans lequel l'interface (13) connectée galvaniquement au transformateur de débit de données (12) est connectée à un canal d'entrée de la pluralité de canaux d'entrée (22) du multiplexeur (20) et le canal de sortie (23) du multiplexeur (20) est connecté à la première structure de couplage (5) connectée galvaniquement au transformateur de débit de données (12) et dans lequel le multiplexeur (20) est configuré de telle sorte que le canal de sortie (23) du multiplexeur (20) délivre en sortie le signal de transmission comportant le second débit de données, et
dans lequel le démultiplexeur (21) présente exactement un canal d'entrée (24) et une pluralité de canaux de sortie (25), dans lequel le canal d'entrée (24) du démultiplexeur (21) est connecté à la première structure de couplage (8) connectée galvaniquement au transformateur de débit de données (14), dans lequel le canal de sortie (25) du démultiplexeur (21) est connecté à l'interface (15) connectée galvaniquement au transformateur de débit de données (14) et dans lequel le démultiplexeur (21) est configuré de telle sorte que le canal de sortie (25) du démultiplexeur (21) délivre en sortie le signal d'origine.

6. Transmetteur de signaux (1) selon l'une des revendications 2 à 4, dans lequel le transformateur de débit de données (12) fixe ou le transformateur de débit de données (14) mobile comprend un brouilleur (27) et l'autre transformateur de débit de données (12 ; 14) respectif comprend un désembrouilleur (30), dans lequel
un canal d'entrée du brouilleur (27) est connecté à l'interface (13 ; 15) connectée galvaniquement au transformateur de débit de données (12 ; 14) de telle sorte que le brouilleur (27) reçoit le signal d'origine comportant le premier débit de données en provenance de l'interface (13 ; 15),
le brouilleur (27) est configuré de telle sorte que, lors du fonctionnement, le brouilleur (27) superpose le signal d'origine à un signal comportant un débit de données supérieur au premier débit de données, de sorte qu'un signal intermédiaire comportant un débit de données supérieur au premier débit de données est formé,
un canal de sortie du brouilleur (27) est connecté à la première structure de couplage connectée galvaniquement au transformateur de débit de données de telle sorte que, lors du fonctionnement du transmetteur de signaux (1), le signal intermédiaire est délivré en sortie à la première structure de couplage, un canal d'entrée du désembrouilleur (30) est connecté à la première structure de couplage connectée galvaniquement au transformateur de débit de données de telle sorte que le désembrouilleur (30) reçoit le signal intermédiaire en provenance de la structure de couplage,
le désembrouilleur (30) est configuré de telle sorte que, lors du fonctionnement, le désembrouilleur (30) forme le signal d'origine à partir du signal intermédiaire, et
un canal de sortie du désembrouilleur (30) est connecté à l'interface (13 ; 15) connectée galvaniquement au transformateur de débit de données de telle sorte que l'interface (13 ; 15) reçoit le signal d'origine en provenance du désembrouilleur (30).

7. Transmetteur de signaux (1) selon la revendication précédente, dans lequel le signal intermédiaire est le signal de transmission comportant le second débit de données.

8. Transmetteur de signaux (1) selon la revendication 6, dans lequel le transformateur de débit de données (12) fixe ou le transformateur de débit de données (14) mobile comprend un codeur (28) et l'autre transformateur de débit de données respectif comprend un décodeur (29), dans lequel
un canal de sortie du brouilleur (27) est connecté à un canal d'entrée du codeur (28) de telle sorte que le codeur (28) reçoit le signal intermédiaire en provenance du brouilleur (27),
le codeur (28) est configuré de telle sorte que, lors du fonctionnement, le codeur (28) transcode le signal intermédiaire, de sorte que le signal de transmission comportant le second débit de données est formé avec une composante de tension continue réduite par rapport à celle du signal intermédiaire,
un canal de sortie du codeur (28) est connecté à la première structure de couplage connectée galvaniquement au transformateur de débit de données (12 ; 14) de telle sorte que la première structure de couplage reçoit le signal de transmission en provenance du codeur (28),
un canal d'entrée du décodeur (29) est connecté à la première structure de couplage connectée galvaniquement au transformateur de débit de données (12 ; 14) de telle sorte que le décodeur (29) reçoit le signal de transmission en provenance de la structure de couplage, le décodeur (29) est configuré de telle sorte que, lors du fonctionnement, le décodeur (29) transcode le signal de transmission en provenance de la structure de couplage, de sorte que le signal intermédiaire est formé avec la composante de tension continue supérieure à celle du signal de transmission, et
un canal de sortie du décodeur (29) est connecté à un canal d'entrée du désembrouilleur (30) de telle sorte que le désembrouilleur (30) reçoit le signal intermédiaire.

9. Transmetteur de signaux (1) selon la revendication 1, dans lequel le dispositif de conversion fixe ou le dispositif de conversion mobile présente un codeur (28) et l'autre dispositif de conversion respectif présente un décodeur (29), dans lequel
un canal de sortie du dispositif de conversion connecté galvaniquement à l'interface (13, 15) est connecté à un canal d'entrée du codeur (28) de telle sorte que, lors du fonctionnement du transmetteur de signaux (1), le codeur reçoit le signal d'origine en provenance de l'interface (13, 15),
le codeur (28) est configuré de telle sorte que, lors du fonctionnement, le codeur (28) transcode le signal d'origine de telle sorte que le signal de transmission comportant le premier débit de données et comportant une composante de tension continue réduite par rapport à celle du signal d'origine est formé,
un canal de sortie du codeur (28) est connecté à la première structure de couplage connectée galvaniquement au dispositif de conversion de telle sorte que la structure de couplage reçoit le signal de transmission en provenance du codeur (28),
un canal d'entrée du décodeur (29) est connecté à la première structure de couplage connectée galvaniquement au dispositif de conversion de telle sorte que le décodeur (29) reçoit le signal de transmission en provenance de la structure de couplage,
le décodeur (29) est configuré de telle sorte que, lors du fonctionnement, le décodeur (29) transcode le signal de transmission de sorte que le signal d'origine est restauré, et
un canal de sortie du décodeur (29) est connecté à l'interface (13, 15) connectée au dispositif de conversion de telle sorte que l'interface (13, 15) reçoit le signal d'origine en provenance du décodeur (29).

10. Transmetteur de signaux (1) selon l'une des revendications précédentes, dans lequel
la partie fixe (2) comprend une seconde structure de couplage (6) fixe capacitive et
la partie mobile (3) comprend une seconde structure de couplage (9) capacitive et mobile de manière concentrique,
la seconde structure de couplage (9) fixe et la seconde structure de couplage mobile sont espacées l'une de l'autre de sorte qu'elles forment une seconde voie de transmetteur capacitive (11) pour un signal de la partie fixe (2) à la partie mobile (3),
le dispositif de conversion (12) fixe est connecté galvaniquement à la seconde structure de couplage (6) fixe,
le dispositif de conversion (14) mobile est connecté galvaniquement à la seconde structure de couplage (9) mobile,
dans lequel le dispositif de conversion (12) fixe et le dispositif de conversion (14) mobile sont respectivement configurés de telle sorte qu'ils génèrent, lors du fonctionnement du transmetteur de signaux (1), à partir d'un signal d'origine numérique, un signal de transmission numérique comportant une composante de tension continue réduite par rapport à celle du signal d'origine, et restaurent le signal d'origine à partir du signal de transmission à partir du signal de transmission.

11. Transmetteur de signaux (1) selon la revendication 1, dans lequel la première et la seconde paire de sections d'électrode (37) en forme de cercle partiel sont toutes deux disposées dans une première position axiale et les sections d'électrode d'une autre paire de sections d'électrode sont disposées dans des première et seconde positions radiales espacées l'une de l'autre, et en ce que la paire d'électrodes est disposée dans une seconde position axiale et les électrodes de la paire d'électrodes sont disposées dans les première et seconde positions radiales.

12. Transmetteur de signaux (1) selon la revendication 1 ou 11, dans lequel la première structure de couplage fixe ou la première structure de couplage mobile présente une largeur dans la direction radiale de 15 mm ou moins avec la première et la seconde paire de sections d'électrode en forme de cercle partiel.

13. Transmetteur de signaux (1) selon l'une des revendications 1 et 11 à 12, dans lequel le transmetteur de signaux (1) présente un boîtier comportant une surface de paroi extérieure de boîtier, dans lequel le boîtier entoure les structures de couplage (5, 6 ; 8, 9) de manière concentrique et dans lequel la surface de paroi extérieure de boîtier présente un diamètre de 150 mm ou moins, de préférence de 140 mm ou moins et de manière particulièrement préférée de 120 mm ou moins.
